# DEMANDE DE BREVET EUROPEEN

(11) **EP 0 996 308 A1**
(43) Date de publication de la demande: **26.04.2000**
(21) Numéro de dépôt: 99402528.6
(22) Date de dépôt: 14.10.1999
(51) Int. Cl.: H04Q 11/00, H04J 14/02

(54) **Réseau de telecommunication comportant des moyens de gestion des ressources de transmission des éléments de réseau**

(30) Priorité: 19.10.1998 FR 9813061
(71) Demandeur: ALCATEL, 75008 Paris (FR)
(72) Inventeur: Drion, Christophe, 91190 Gif sur Yvette (FR); Chambon, Olivier, 75004 Paris (FR); Coujoulou, Philippe, 92370 Chaville (FR)
(74) Mandataire: Lamoureux, Bernard

(57) **Abrégé**

L'invention concerne un réseau de télécommunication comprenant un ensemble de ressources pour la transmission des signaux et des éléments de réseau (NE1, NE2, NE3) formant des noeuds de routage, chaque élément de réseau étant apte à assurer des transmissions avec des éléments de réseau adjacents, à partir de l'ensemble de ressources de transmission.

Selon l'invention, le réseau comporte des moyens de gestion des ressources de transmission (20) aptes à définir un sous-ensemble de ressources de gestion modifiable dynamiquement, associé aux ressources de transmission utilisées à un instant t pour le routage des signaux dans un élément de réseau.

L'invention s'applique à la gestion des ressources de transmission dans les réseaux.

## Description

L'invention concerne un réseau de télécommunication et plus particulièrement les moyens de gestion des ressources de transmission des éléments de réseau.

L'invention s'applique plus particulièrement aux réseaux de télécommunication optiques ou aux réseaux de télécommunication radioélectriques.

On rappelle que dans les réseaux de télécommunication, un élément de réseau (*Network Element* en terminologie anglo-saxonne) ou noeud de commutation ou de routage, est caractérisé quelque soit le type de réseau, par ses capacités de transmission, avec les éléments de réseau ou noeuds adjacents. Cette capacité de transmission est organisée en sous-ensembles formés par de plus petites structures logiques.

On peut citer à titre d'exemple pour de telles structures logiques le multiplexage temporel, TDM (Time Division Multiplexing), le multiplexage par code de phase CDM (Code Division Multiplexing), le multiplexage spatial SDM (Space Division Multiplexing), ou le multiplexage en longueur d'onde WDM (Wavelength Division Multiplexing).

Ces structures ou sous-ensembles sont intéressants car ils représentent des chemins pour le signal transmis entre deux noeuds distants que l'on dénomme canal de transmission.

Dans la plupart des réseaux actuels, les canaux (ou ressources) de transmission pouvant être utilisés sont en nombre limité. La gestion de ces canaux fait appel à des ressources de gestion en nombre limité.

Si bien que l'ensemble des ressources de gestion associées aux ressources (ou canaux) de transmission peut être créé de façon statique principalement à l'initialisation d'un élément de réseau, même si certaines de ces ressources ne sont pas utilisées.

En effet, dans le cas d'un réseau à multiplexage temporel, on a par exemple un nombre de canaux fixe correspondant chacun à un intervalle de temps d'une trame contenant un nombre donné d'intervalles de temps.

Comme la gestion des ressources à été principalement implémentée jusqu'à présent sur de tels réseaux, la seule solution existante réside en une création statique des ressources au moment de l'initialisation c'est à dire lorsque l'élément de réseau est mis en service ou lorsqu'il est réinitialisé.

Au contraire, dans d'autres types de réseau, tels que les réseaux à multiplexage en longueur d'onde WDM par exemple, le nombre de canaux de transmission susceptibles d'être utilisés formant l'ensemble des ressources de transmission, est très élevé alors que seulement quelques uns d'entre eux sont parfois utilisés.

Le Déposant est confronté au problème que la création de l'ensemble des ressources de gestion associée aux ressources de transmission possibles pour des réseaux dont le nombre de ressources de transmission est potentiellement très élevé, est une solution complexe et qui conduirait à une surcharge inacceptable du système gestion. Le Déposant a en effet constaté que l'application, dans le cadre d'un tel réseau, d'une création statique des ressources de gestion, conduirait de plus à un nombre inacceptable de ressources gérées non utilisées.

Il ne lui a donc pas été possible d'envisager d'avoir une gestion de toutes les ressources correspondant à tous les canaux de transmission du fait de leur grand nombre.

Le problème que le déposant a cherché à résoudre ici est donc d'apporter des moyens de gestion simplifiés adaptés aux ressources de transmission des réseaux lorsque celles-ci sont, potentiellement, en nombre important.

La présente invention a pour but de résoudre ce problème en prévoyant des moyens de gestion de ressources de transmission aptes à définir un sous-ensemble de ressources de gestion modifiable dynamiquement, associé aux ressources de transmission utilisées à un instant t pour le routage des signaux dans un élément de réseau.

La présente invention a donc plus particulièrement pour objet un réseau de télécommunication comprenant un ensemble de ressources pour la transmission des signaux et des éléments de réseau formant des noeuds de routage, chaque élément de réseau étant apte à assurer des transmissions avec des éléments de réseau adjacents, à partir de l'ensemble de ressources de transmission, principalement caractérisé en ce qu'il comporte des moyens de gestion des ressources de transmission aptes à définir un sous-ensemble de ressources de gestion modifiable dynamiquement, associé aux ressources de transmission utilisées à un instant t pour le routage des signaux dans l'élément de réseau considéré.

D'autres particularités et avantages de l'invention apparaîtront à lecture de la description qui va suivre et qui est donnée à titre d'exemple non limitatif en regard des dessins sur lesquels:

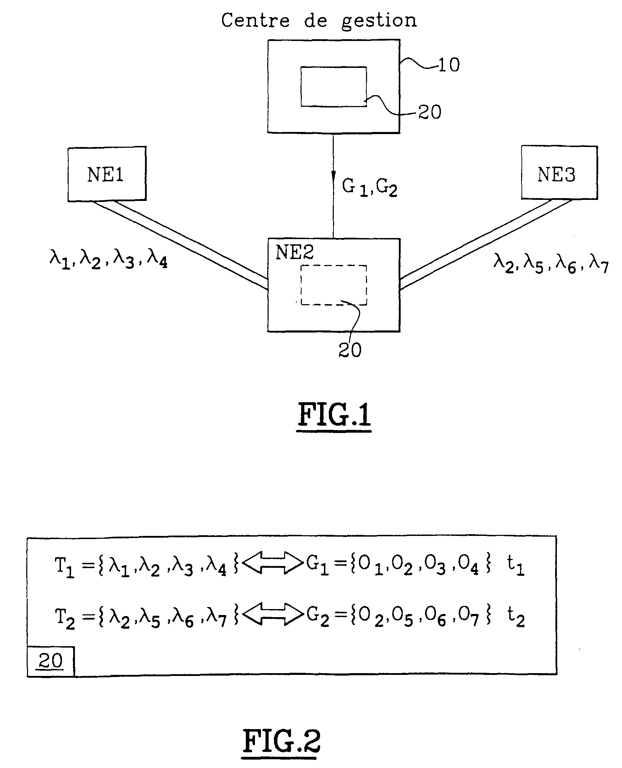

- les figures 1 et 2, représentent le schéma de principe de l'invention.

La description qui est faite ci-après, est donnée dans le cadre d'un réseau optique à multiplexage en longueur d'onde WDM.

On rappelle qu'un élément de réseau d'un réseau optique comporte des connexions de fibres entrantes E, des connexions de fibres sortantes S et des connexions de fibres bidirectionnelles.

Étant donné les ressources de transmission possibles dans un réseau à multiplexage en longueur d'onde (WDM) et compte tenu des restrictions dues à l'élément de réseau concerné ou à celles des éléments de réseau adjacents, on peut par configuration logicielle sélectionner n'importe quelle longueur d'onde formant ainsi un sous-ensemble de ressources pour constituer les canaux de transmission entre un élément de réseau et les éléments de réseau adjacents.

Selon l'invention, des moyens de gestion permettent d'avoir des ressources de gestion dynamiques afin de gérer les ressources de transmission sélectionnée à un instant donné pour un élément de réseau.

Pour cela les moyens de gestion sont aptes à définir à chaque instant un sous-ensemble de ressources de gestion associée au sous-ensemble de ressources de transmission utilisées par l'élément de réseau considéré et qui peut être modifié selon le besoin ou les contraintes.

Autrement dit, si à un instant t un sous-ensemble de ressources de transmission à été sélectionné, à l'instant t+1, ce sous-ensemble peut être repris complètement ou partiellement ou bien un nouveau sous-ensemble (donc distinct) peut avoir été sélectionné.

Pour permettre ces modifications un module logique 20 permet aux moyens de gestion de définir les ressources de gestion associées aux dites ressources de transmission en effectuant des créations et/ou des suppressions dynamiques des ressources de gestion associées.

Ce module logique 20 met en oeuvre un logiciel de gestion utilisant un langage spécifique de modélisation des informations pour la gestion des réseaux présentant les ressources de gestion comme des objets que l'on peut créer ou supprimer. On peut citer à titre d'exemple les langages orientés objets tels que les langages GDMO ou C++ pour réaliser une description des ressources de gestion en tant qu'objets manipulés selon les besoins ou les contraintes de transmission soit directement par le centre de gestion auquel est rattaché l'élément de réseau soit directement par l'élément de réseau.

A cette fin le logiciel permet à un instant t la définition d'un sous-ensemble de ressources de gestion associé aux ressources de transmission utilisées à cet instant t en mettant en oeuvre l'étape suivante :
- la création et/ou la suppression dynamique de ressources de gestion, correspondant aux ressources de transmission utilisée pour le routage.

Des informations sur les contraintes liées au réseau et aux éléments réseau sont entrées dans le logiciel de manière à ce qu'il soit apte à effectuer :
- la création et/ou la suppression d'une ou plusieurs ressources de gestion associée à une ressource de transmission donnée pouvant être imposée par un ou plusieurs éléments réseau adjacent à l'élément de réseau considéré ;
ou
- la création et/ou la suppression d'une ressource de gestion associée à une ressource de transmission donnée pouvant être imposée par l'élément de réseau concerné.

Dans le premier mode de réalisation, le centre de gestion étant apte à définir les ressources de gestion directement, lorsque ledit centre de gestion a besoin d'établir un nouveau chemin entre deux éléments de réseau distants, il crée les ressources de gestion associées aux canaux de transmission qu'il désire utiliser.

Le canal physique de transmission est alors automatiquement créé.

Dans le deuxième mode de réalisation, la définition des ressources de gestion étant faite directement par l'élément de réseau, lorsque un nouveau canal de transmission, (par exemple une nouvelle longueur d'onde dans le cas du multiplexage en longueur d'onde) est utilisé, l'élément de réseau détecte cette apparition et crée automatiquement la ressource de gestion associée.

Ces deux modes de réalisation mettent en oeuvre respectivement les deux mécanismes qui viennent d'être décrits et qui peuvent être implémentés l'un après l'autre ou de manière complémentaire.

Le premier mode de réalisation peut être utilisé dans des éléments de réseau uniquement émetteurs c'est à dire dans les éléments de réseau sources de signaux optiques.

Le deuxième mode de réalisation peut être utilisé dans des éléments de réseau recevant des signaux optiques.

L'ensemble de ces caractéristiques est illustré par le schéma de la figure 1 et celui de la figure 2.

Sur la figure 1 on a illustré trois éléments de réseau NE1, NE2, NE3 et on va considérer pour simplifier uniquement le rôle de l'élément NE2 dans le réseau. L'élément de réseau NE2 doit permettre l'acheminement des signaux optiques provenant de l'élément de réseau NE1 et à destination de l'élément de réseau NE3.

Le module de gestion 20 permet de définir l'ensemble G₁ composé des ressources de gestion O₁, O₂, O₃ et O₄ respectivement associées aux ressources de transmission λ₁, λ₂, λ₃ et λ₄ utilisées pour effectuer le routage T₁ à l'instant t₁.

A l'instant t₂, le module de gestion 20 modifie l'ensemble G₁ en un ensemble G₂ composé des ressources de gestion O₂, O₅, O₆ et O₇ associées aux ressources de transmission λ₂, λ₅, λ₆ et λ₇ utilisées à cet instant t₂ pour un routage T₂, et ceci en supprimant les ressources de gestion O₁, O₃ et O₄ et en créant les ressources de gestion O₅, O₆ et O₇.

Le module représenté sur la figure 2 est, comme on l'a déjà dit, implanté soit dans le centre de gestion 10 soit dans l'élément de réseau NE2.

La présente invention présente les avantages suivants :
- elle permet une grande flexibilité dans les systèmes de gestion des transmissions,
- le nombre de ressources de gestion gérées est aussi faible que possible, ce qui minimise le poids du système de gestion. Cette caractéristique permettra aux systèmes de gestion de réseaux d'êtres plus efficaces,
- cette solution permet également d'avoir la possibilité de faire évoluer les éléments de réseau plus facilement.

## Revendications

1. Réseau de télécommunication comprenant un ensemble de ressources pour la transmission des signaux et des éléments de réseau (NE1, NE2, NE3) formant des noeuds de routage, chaque élément de réseau étant apte à assurer des transmissions avec des éléments de réseau adjacents, à partir de l'ensemble de ressources de transmission, caractérisé en ce qu'il comporte des moyens de gestion des ressources de transmission (20) aptes à définir un sous-ensemble de ressources de gestion (G1 ou G2) modifiable dynamiquement, associé aux ressources de transmission utilisées à un instant t pour le routage des signaux dans un élément de réseau.

2. Réseau de télécommunication selon la revendication 1, caractérisé en ce que la définition d'un sous-ensemble de ressources de gestion (G1 ou G2) associé aux ressources de transmission utilisées à un instant t comprend :
- la création et/ou la suppression dynamique de ressources de gestion, correspondant aux ressources de transmission utilisée pour le routage.

3. Réseau de télécommunication selon l'une quelconque des revendications précédentes, caractérisé en ce que la création et/ou la suppression d'une ressource de gestion associée à une ressource de transmission donnée peut être imposée par un ou plusieurs éléments de réseau adjacents à l'élément de réseau considéré.

4. Réseau de télécommunication selon la revendication 2 ou 3, caractérisé en ce que la création et/ou la suppression d'une ressource de gestion associée à une ressource de transmission donnée peut être imposée par l'élément de réseau considéré.

5. Réseau de télécommunication selon la revendication 1, caractérisé en ce que les moyens de gestion des ressources de transmission (20) sont dans un centre de gestion (10) affecté à un ou plusieurs éléments de réseau.

6. Réseau de télécommunication selon la revendication 1, caractérisé en ce que les moyens de gestion des ressources de transmission (20) sont dans l'élément de réseau concerné (NE2).
